Europäisches Patentamt

European Patent Office

Office européen des brevets

(11) Publication number: **0 647 046 A1**

# EUROPEAN PATENT APPLICATION

(21) Application number: **94113716.8**

(51) Int. Cl.6: **H04L 27/22**

(22) Date of filing: **01.09.94**

(30) Priority: **03.09.93 IT MI931894**

(43) Date of publication of application:
**05.04.95 Bulletin 95/14**

(84) Designated Contracting States:
**AT BE CH DE DK ES FR GB GR IT LI NL SE**

(71) Applicant: **SIEMENS TELECOMUNICAZIONI S.P.A.**
**SS. 11 Padana Superiore Km. 158**
**I-20060 Cassina de Pecchi (Milano) (IT)**

(72) Inventor: **Benedetto, Sergio, c/o Politecnico di Torino**
**Dipart. di Elettronica,**
**Viale degli Abruzzi, 24**
**I-10100 Torino (IT)**
Inventor: **Magnani, Vilma**
**Via Brescia, 5**
**I-27100 Pavia (IT)**
Inventor: **Mondin, Marina, c/o Politecnico di Torino**
**Dipart. di Elettronica,**
**Viale degli Abruzzi, 24**
**I-10100 Torino (IT)**
Inventor: **Pasello, Fabio**
**Via Fratelli Bressan, 6**
**I-20126 Milano (IT)**

(54) **Procedure and device for phase ambiguity resolution in a trellis coded modulation system.**

(57) The device for phase ambiguity resolution uses the same branch metrics of the correlation type used by the Viterbi decoder. At each symbol time it chooses the best branch metric among those departing from the final state of the most probable path identified by the Viterbi decoder and accumulates it for a pre-set number of symbol times while observing whether the sum obtained exceeds or not a given threshold. In the former case the demodulated signal phase is considered to be correct while in the latter case the phase is considered to be erroneous and an algorithm for performing phase counter-rotation on the received signal is activated.

FIG. 3

The present invention relates to a procedure and device for phase ambiguity resolution in demodulators with trellis coded numerical modulation and Viterbi decoding.

The invention which is the object of the present invention is applicable to numerical transmission systems with coding integrated in the modulation. In this environment coding of the digital signal and modulation process are not independent but intimately integrated to permit achieving performance in terms of error probability and band occupation better overall than the adoption of transmission systems without coding or employing a separate code.

The modulation diagrams referred to use the known trellis codes, i.e. codes with memory, which work in such a manner that the sequence of signals transmitted is not made up of independent symbols but, on the contrary, each symbol is correlated with a certain number of preceding symbols.

The trellis code theory is well known: see e.g. the article by S.S. Pietrobon and others entitled "Trellis-Coded Multidimensional Phase Modulation", IEEE Trans. on Information Theory, Vol. 36, No. 1, January 1990.

The demodulator receives a sequence of signals potentially affected by noise and must establish which sequence of signals is transmitted, among those admissible in the paths defined by the trellis code, which with the highest probability corresponds to that received.

For this purpose one of the systems most used makes use of a decoder operating on the basis of the known Viterbi algorithm. The Viterbi algorithm associates with each possible sequence transmitted, corresponding to each possible path in the trellis code, a metric, i.e. a measurement linked to the probability that that is the sequence actually transmitted, and rejects one by one the less probable paths while saving at each symbol time only one path for each state as explained in detail below.

In this type of demodulator the problem of the presence of a phase ambiguity introduced from the carrier recovery circuits, present in the receiver upstream of the decoder, in the sequence of symbols received becomes critical. This is due to the fact that if trellis codes of the type invariant with phase rotations are not used, in the presence of undesired phase rotations errors not otherwise recoverable are introduced in the received symbols.

The problem becomes that of recovering the phase rotations or ambiguities so that the Viterbi decoder works correctly.

A first possible solution to this problem would consist of using the technique of insertion of a particular sequence of symbols (unique word) in the flow of data which would be recognisable and permit identification of the phase shift which occurred. Insertion of the unique word causes however additional problems due to the change of the bit rate of the data flow in the channel and furthermore makes necessary alignment of the sequence received with the unique word before preceding to decoding.

A second possible solution would consist of using codes invariant upon phase rotation. These kinds of codes however are often non-linear and thus not easy to implement but especially they do not allow obtaining the desired performance in terms of error correction capacity.

There is a known method for phase ambiguity resolution for modulation diagrams with not invariant trellis coding described in the article of U. Mengali and others, "Phase Ambiguity Resolution in Trellis-coded Modulation", IEEE Trans. on Communication, Vol. 38, No. 12, December 1990.

In accordance with this known method detection of the non-synchronisation of phase situation takes place by utilising the signal sequence data received and used by the Viterbi algorithm. For identification of the most probable signal sequence transmitted this algorithm employs remote metrics taken by calculating the Euclidean distance of the symbol received from all the possible signal symbols transmitted. The phase non-synchronisation detector is based on the observation of values accumulated on multiple symbol times of a function of said remote metrics.

The main problem inherent in the known solution is that the employment of remote metrics in the Viterbi processor and calculation of said accumulation function involves the use of a high number of logical gates which complicate circuitry realisation in terms also of space occupied on the integrated circuit chip.

Accordingly the purpose of the present invention is to overcome the above mentioned shortcomings and indicate a system for phase ambiguity resolution in demodulators with trellis coding and Viterbi decoder, particularly optimised in terms of complexity and manufacturable by means of the same integrated circuit (ASIC) dedicated to the principal functions necessary for demodulation and decoding of the signal received.

In accordance with the present invention the phase non-synchronisation detector and the Viterbi processor utilise metrics with correlation, by means of which is performed a correlation between the components of the symbol received and the components of the possible symbols transmitted.

The invention consists of a mechanism for detecting the phase non-synchronisation condition joined with a search algorithm which controls a phase rotator. The search process is active on the symbol sequence received until determination of the correct phase.

To achieve said purposes the object of the present invention is a procedure for phase ambiguity resolution in demodulators with trellis coded numerical modulation and Viterbi decoding, said trellis coding causing successions of states which identify coding paths in the trellis, said numerical modulation transforming each state in a symbol represented by a pair of components in phase and in quadrature in the plane of the modulation constellation, said Viterbi decoding calculating state metrics on the basis of branch metrics for the possible paths in the trellis to determine at each symbol time a final state of the most probable path to be reconstructed, **characterised in that** both for phase ambiguity resolution and Viterbi decoding there are used branch metrics of the correlation type which calculate a correlation function of said pair of components in phase (P) and in quadrature (Q) received; **also characterised in that** with each symbol time is chosen the best branch metrics among those departing from the final state of the most probable path, and that said best branch metrics are accumulated for a pre-set number of symbol times while observing whether the sum found exceeds or not a given threshold and if the threshold is not exceeded the phase being considered erroneous and a control procedure being activated for phase counter-rotation to be performed on said component pairs in phase (P) and in quadrature (Q) received until said threshold is exceeded and the phase is considered correct.

Another object of the present invention is a device for phase ambiguity resolution in demodulators with trellis coded numerical modulation and Viterbi decoder, as described in claim 4.

Additional objects of the present invention are further particular aspects of the procedure and device described in the dependent claims.

Further purposes and advantages of the present invention are clarified in the detailed description of an embodiment thereof given below by way of nonlimiting example with reference to the annexed drawings wherein:

FIG. 1 shows a non-limiting example of a diagram of numerical modulation 8-PSK with trellis code and related constellation of eight possible points (from 0 to 7) on a plane of the modulation phases, of components P (in phase) and Q (in quadrature);

FIG. 2 shows a state diagram of the paths of the trellis code for the example described of modulation 8-PSK, three symbol times (T-2, T-1, T), eight possible states 000, 001, ..... 111);

FIG. 3 shows the block diagram of the phase ambiguity resolver device which is the object of the present invention integrated in the Viterbi decoder; and

FIG. 4 shows the detailed block diagram of the phase ambiguity resolver device.

It is considered useful at this point to give some premises of a theoretical nature concerning trellis coding, Viterbi decoding algorithm and numerical modulations adopted.

The modulation diagrams referred to use trellis codes, i.e. codes with memory, as mentioned above.

At each symbol time corresponding to the system clock period, the coder receives m bits of information and supplies at output n coded bits (n > m, with m/n code rate). The coded bits depend on the m bits received at that symbol time and on k bits memorised in the preceding symbol times. Each of the 2n possible combinations of the n coded bits is thus associated with a particular signal transmitted by the modulator.

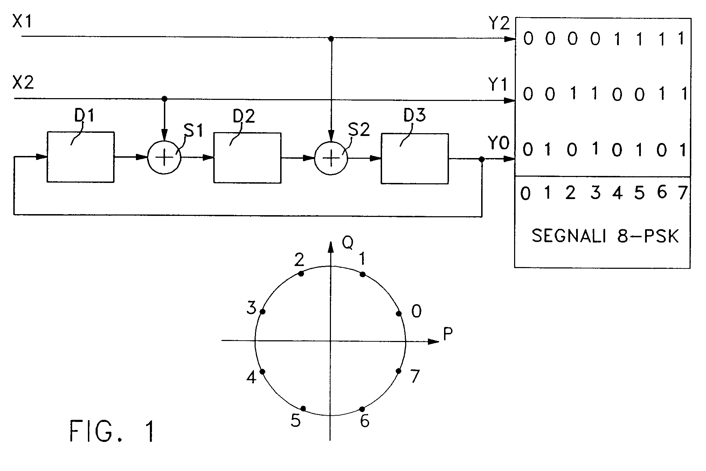

FIG. 1 shows a non-limiting example of a numerical modulation diagram 8-PSK with trellis code with code rate $m/n = 2/3$.

In this case $m = 2$ (bits X1, X2), $n = 3$ (bits Y2, Y1, Y0), $k = 3$.

The bit Y0 is obtained by combination of the bits X1, X2 through the delay lines D1, D2, D3 and the adders S1, S2 obtaining eight possible bit combinations at output as shown in the frame to the right in FIG. 1.

As is known and diagrammed in FIG. 1 the modulation 8-PSK transforms the eight output bit combinations Y2, Y1, Y0 in a constellation of eight possible symbols (from 0 to 7) identified by their P (in phase) components and Q (in quadrature) components in a plane of the modulation phases.

In the sequence of signals transmitted each symbol is thus correlated with the preceding one. In the phase of demodulation and decoding of the signals received, for each symbol received it is necessary to decide which symbol was actually transmitted among those possible, even on the basis of a certain number of previous symbols.

The coder is thus a sequential state machine with k bits of memory which determine the number of states of the machine ($2^k$). In the case examined of modulation 8-PSK, and $k = 3$, we will have eight possible states for each symbol time.

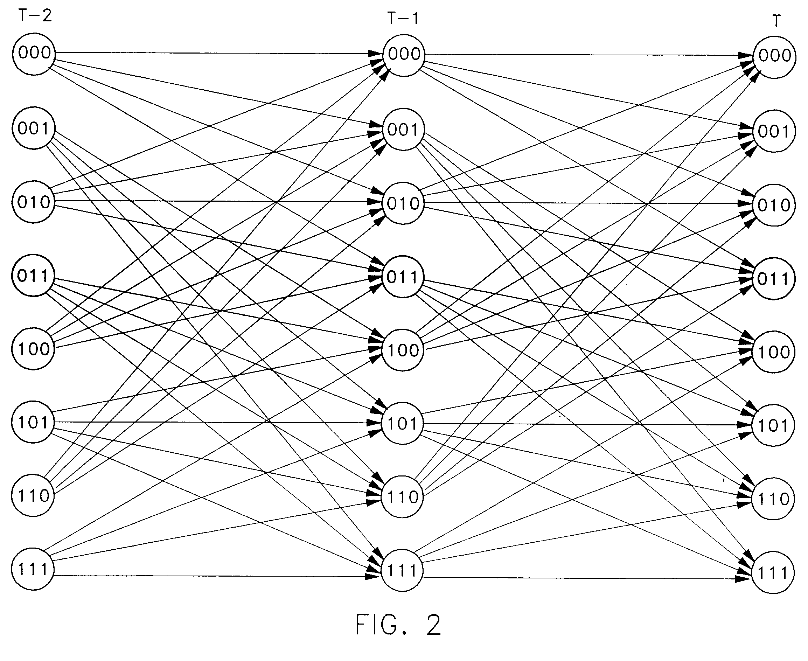

FIG. 2 shows a state diagram for the trellis code. In the example described, at each symbol time (in the figure are shown three, T-2, T-1, T), there will be eight possible states (000, 001, ..... 111). This diagram is used by the Viterbi decoder because it permits display of all the possible signal sequences transmitted and paths between the various states.

Indeed the demodulator/decoder receives a signal sequence affected by the noise and must establish which signal sequence transmitted, among those admissible by the code, is most likely to correspond to that received.

The Viterbi decoder associates with each succession of states, corresponding to each possible path in the trellis (hence each possible sequence transmitted) a state metric, i.e. a measurement linked to the probability that that is the sequence actually transmitted, i.e. the path actually covered, and rejects one by one the less probable paths, while saving at each symbol time a single path among the different ones converging in each state.

After an appropriate number of symbols received, defined decoding depth, the decoder chooses with maximum likelihood the state which at the symbol time considered has the best metric and hence the path which terminates in that state.

To construct the metrics to be associated with each trellis state the decoder calculates, at each symbol time and for each symbol received, the branch metrics in a number equal to that of the possible symbols transmitted (eight in the example described). These are measurements linked to the probability that each modulation system constellation symbol used is that transmitted at that symbol time. They are then summed along the possible paths in the trellis to obtain the state metrics.

For a detailed description of the Viterbi decoders see e.g. the article by G.D. Forney, jr. "The Viterbi Algorithm", Proc. of the IEEE, Vol. 61, No. 3, March 1973, pages 268-278.

In accordance with the present invention the phase ambiguity resolver uses the same information used by the Viterbi processor. Observation in accordance with certain criteria of the trellis branch and state metrics permits identification of the failed phase synchronisation condition of the recovered carrier and hence intervention by counter-rotating the phase of the signal received by the necessary amount. In particular, at each symbol time the best branch metric is chosen among those departing from the final state of the most probable path identified in the trellis up to that time and accumulated for a pre-set number of symbol times, while observing whether the sum found exceeds or is less than a certain threshold. In the former case the demodulated signal phase is considered correct while in the latter the phase is considered erroneous and a phase rotation control procedure is activated.

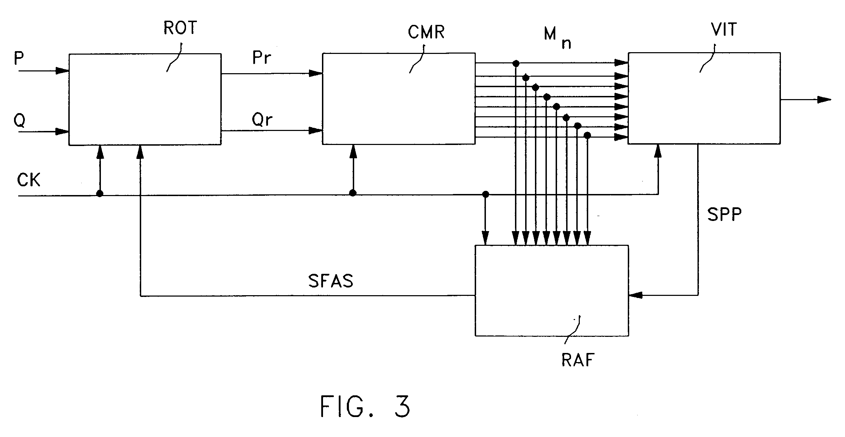

FIG. 3 shows the block diagram of the phase ambiguity resolver device which is the object of the present invention integrated in the Viterbi decoder.

ROT indicates a circuit of known type which on a command from the block RAF executes phase rotations of a certain amount on the input signals. The succession of phase shifts realised in the rotator is performed in accordance with a particular algorithm described below and activated by the block RAF.

ROT receives at input the components in phase P and in quadrature Q of the base band signal after demodulation, appropriately quantized, (in the specific case under examination they are quantized on 8 bits) and the clock CK synchronous with the data. ROT rotates the reference system of the plane P, Q of the modulation symbol constellation (FIG. 1) by a certain angle given by the command coming from RAF, in such a manner as to produce at the output a new pair of components Pr, Qr given by the corresponding rotation of those of input.

The components Pr, Qr, optionally modified by the rotation phase in ROT, are supplied to the block CMR which calculates the branch metrics, which is also synchronised by the clock CK.

For each pair of values Pr and Qr, hence for each symbol received, CMR calculates the branch metrics Mn, of the correlation type, for all the possible signals transmitted (8 for one diagram 8-PSK), in accordance with the following expression:

$$Mn = PrPn + QrQn \qquad (1)$$

where the components Pr, Qr are those of the signal actually received; the components Pn and Qn are those of each of the 8 possible signals of the transmitted signal constellation in accordance with the modulation diagram 8-PSK shown in FIG. 1.

The eight metrics calculated by CMR are supplied to the Viterbi decoder VIT and also to the phase ambiguity resolver RAF.

The Viterbi decoder VIT supplies at output at each symbol time the reconstructed signal corresponding to the bits X1, X2 of the signal to be transmitted before coding (FIG. 1) and also the bits of the state estimated most probable SPP, i.e. that having the highest state metric (in FIG. 2 at each symbol time one of the tern of bits 000, 001, .....111).

The architecture and mode of operation of the block VIT are known to those skilled in the art who can thus provide it on the basis of the description supplied here.

The phase ambiguity resolver block RAF, which is the object of the present invention, on the basis of the information on the branch metrics received from CMR and most probable state SPP received from VIT and synchronised by the clock CK, commands the phase rotations performed by ROT.

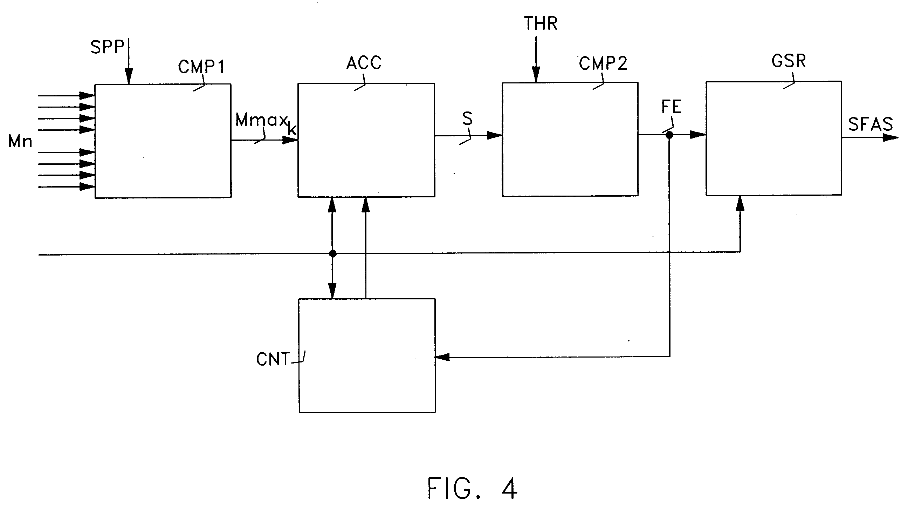

The block diagram of the phase ambiguity resolver block RAF is shown in FIG. 4.

In FIG. 4 CMP1 indicates a comparator of the branch metrics Mn received from CMR (FIG. 3). From the comparator CMP1 is extracted at each symbol time the highest metric Mmaxk among only the metrics of the branches departing from the final state of the most probable path in the trellis which, as mentioned above, is caused in the Viterbi decoder VIT at each symbol time and identified by means of the signal SPP.

As may be seen from FIG. 2, from each state depart only some of the possible paths toward other states of the next symbol time. Then the signal SPP selects among all the possible branch metrics at the inputs of CMP1 only those for the paths departing from the most probable state at each symbol time.

In the particular example described, the signal SPP is the least significant bit of the tern of most probable state bits, which allows selection in CMP1 of only the branch metrics for the even signals (000, 010, 100, 110) or odd signals (001, 011, 101, 111) of the modulation constellation.

The highest metric Mmaxk extracted in CMP1 is sent to an accumulator ACC which performs the following operation:

$$S = \sum_{k=1}^{N} Mmaxk \ (M1,M2,M3,\ldots Mn) \qquad (2)$$

where n is the number of possible branch metrics selected by SPP (here it is n = 4); N is the number of metrics accumulated in a corresponding number N of symbol times which defines the accumulation window or observation period of the phase rotations.

The summation S obtained at the end of the set observation period is then compared in a comparator CMP2 with a predetermined threshold THR. If the threshold has been passed the recovered carrier phase is considered correct but otherwise it is considered incorrect.

The threshold value depends on the statistical distribution of the variable S of equation (2) in the two cases, correct and incorrect phase, and on the probability of a false alarm (Pfa = probability of simulation of corrected phase condition) and of misdetection (Pm = probability of misdetection of the erroneous phase condition) and was determined experimentally.

In addition the length of the accumulation window N becomes variable and its value depends on the two following operating conditions: correctly acquired carrier phase and phase synchronisation search. In correct synchronisation condition the accumulation window N is kept at double the length of the search condition (in the specific case discussed it is N = 4096 symbol times in search phase). In this manner, with a longer window in the correct phase periods there is avoided the easy loss of synchronisation acquired after the initial transient. With a shorter window in the correct phase search periods synchronisation can be recovered faster after a phase jump.

CNT indicates a programmable counter, synchronised by the clock CK, which determines the accumulation window counting up to N, after which it supplies a zeroing command to the accumulator ACC. The erroneous phase signal FE produced by CMP2 is used to choose between the two values of N in CNT for the two cases of correct and incorrect phase.

As stated, if the threshold THR is not exceeded the comparator CMP2 supplies an erroneous phase signal FE to the block GSR which activates a correct phase search procedure. The procedure calls for rotation of the signal received alternately increasing and decreasing by progressive multiples of the angle of symmetry of the signal constellation used (in the case of modulation 8-PSK, multiples of 45°) in accordance with a given sequence.

For each phase rotation the RAF calculations are repeated on the accumulation window of the search phase until the phase is found correct and the erroneous phase signal FE changes state.

The particular sequence of the example described in accordance with which the rotations take place during the search phase is +45°, -45°, +90°, -90°, +135°, -135°, +180°, each of these angles being for phase 0. This is due to the fact that the most probable phase jumps in relation to a previous condition of correct synchronisation are the smaller ones and hence the sequence will begin from the latter.

In the circuitry embodiment, in GSR is present a counter which, activated upon reception of the erroneous phase signal FE, counts the number of angular rotations performed with increase and decrease and is again zeroed when the phase is again correct.

Since rotating the signal received by predefined phase amounts means changing its two components of constant quantity pairs, said constant quantity pairs are prememorised in a memory contained in GSR. The content of the angular rotation counter serves thus to address said memory and supply on the output SFAS the selected quantity pairs. In the rotator ROT (FIG. 3) is performed the operation of variation of the components P and Q to obtain the rotated components Pr and Qr.

Numerous variations are possible on the embodiment described by way of example in FIG. 1 without thereby going beyond the scope of the innovative principles inherent in the inventive idea. The possible variations on the present invention concern above all the parameters represented by the threshold THR and by the length of the accumulation window.

In the above-described embodiment the threshold THR of the phase non-synchronisation detector is fixed. In an alternative embodiment the threshold can be variable and linked e.g. to the signal/noise ratio of the received signal. In the practical case in which the channel can be considered with constant noise, there is obtained in this manner a threshold THR dependent on the amplitude of the signal received through any easily obtained relationship.

But the length of the accumulation window of the branch metrics, which in the above embodiment is variable, can be kept fixed.

Furthermore the embodiment described applies to the case of numerical modulation 8-PSK but it is clear that any other type of numerical modulation PSK or QAM can be used. The number of states and hence the number of branch metrics Mn and the other parameters such as the accumulation window, threshold THR, angle of symmetry and variation value pairs of the received signal components will of course change.

## Claims

1. Procedure for phase ambiguity resolution in demodulators with trellis coded numerical modulation and Viterbi decoding, said trellis coding causing successions of states which identify coding paths in the trellis, said numerical modulation transforming each state in a symbol represented by a pair of components in phase (P) and in quadrature (Q) in the modulation constellation plane, said Viterbi decoding calculating state metrics on the basis of branch metrics (Mn) for the possible paths in the trellis to determine at each symbol time a final state of the most probable path to be reconstructed, **characterised in that** for phase ambiguity resolution and Viterbi decoding are used branch metrics of the correlation type which calculate a correlation function of said component pairs in phase (P) and quadrature (Q) received; **and in that** at each symbol time is chosen the best branch metric (Mmaxk) among those departing from the final state of the most probable path, and are accumulated, said best branch metric (Mmaxk) for a pre-set number of symbol times (N), while observing whether the sum found exceeds or not a given threshold (THR), and if it does not exceed the threshold the phase being considered erroneous and there being activated a phase counter-rotation control procedure to be performed on said components pairs in phase (P) and in quadrature - (Q) received until said threshold (THR) is exceeded and the phase is considered correct.

2. Procedure for phase ambiguity resolution as set forth in claim 1, characterized in that said phase counter-rotation control procedure to be performed on the signal received calls for rotation of said components in phase (P) and in quadrature (Q) alternately increasing and decreasing by progressive multiples of an angle of symmetry of the modulation signal constellation, and for repeating at each rotation said operations of choice and accumulation of the best branch metrics and comparison with the threshold until said threshold is exceeded and the phase is considered correct.

3. Procedure for phase ambiguity resolution as set forth in claim 1 or 2, characterized in that said branch metrics (Mn) of the correlation type are calculated in accordance with the expression:

Mn = PrPn + QrQn where the components Pr, Qr are those of the signal received optionally phase rotated and the components Pn, Qn are those of each of the possible modulation constellation signals.

4. Device for phase ambiguity resolution in demodulators with trellis coded numerical modulation and Viterbi decoding, a trellis coder causing successions of states which identify coding paths in the trellis, a numerical modulator transforming each state in a symbol represented by a pair of components in phase (P) and in quadrature (Q) in the constellation modulation plane, a Viterbi decoder calculating state metrics on the basis of branch metrics (Mn) for possible paths in the trellis to determine at each symbol time a final state of the most probable path (SPP) to be reconstructed, **characterised in that it comprises**:

- calculation means (CMR) for the branch metrics of the correlation type for said component pairs in phase (P) and in quadrature (Q) in reception;
- first comparison means (CMP1) of said branch metrics, which determine for each symbol time the highest branch metric (Mmaxk) among those received from said calculation means (CMR) and chosen on the basis of said final state of the most probable path (SPP) which it receives from the Viterbi decoder;
- accumulator means (ACC) which calculate sums (S) of said highest branch metrics (Mmaxk) for a pre-set number of symbol times (N);
- second comparison means (CMP2) for the sums (S) received from said accumulator means (ACC) with a given threshold (THR), which emit an erroneous phase signal (FE) if said threshold is not exceed;
- phase rotation sequence generation means (GSR,ROT) which, when activated by said erroneous phase signal (FE), cause counter-rotation of phase on the component pairs in phase (P) and in quadrature (Q) of the signal received, to find corresponding component pairs in phase (Pr) and in quadrature (Qr) rotated in phase, which supply then to said calculation means (CMR) branch metrics of the correlation type, until said threshold (THR) is exceeded and said erroneous phase signal (FE) is deactivated.

5. Device for phase ambiguity resolution as set forth in claim 4, characterised in that said phase rotation sequence generation means (GSR,ROT) rotate said components in phase (P) and in quadrature (Q) of the signal received, in the plane of the modulation constellation, alternately increasing and decreasing by progressive multiples of an angle of symmetry of the modulation signal constellation.

6. Device for phase ambiguity resolution as set forth in claim 5, characterised in that said phase rotation sequence generation means (GSR,ROT) comprise essentially:
- a first counter which, when activated upon reception of the erroneous phase signal (FE), counts the number of angular rotations performed while increasing or decreasing, and is zeroed again when the phase again becomes correct and said erroneous phase signal (FE) changes state;
- a memory containing pairs of constants which are addressed by the content of said first counter and supplied at output;
- a phase rotator (ROT) which receives said pairs of constants from said memory and changes correspondingly said component pairs in phase (P) and in quadrature (Q) in reception, to find said pairs of components in phase (Pr) and in quadrature (Qr) rotated in phase.

7. Device for phase ambiguity resolution as set forth in any of claims 4 through 6, characterised in that said calculation means (CMR) of the branch metrics of the correlation type calculate the following expression:

Mn = PrPn + QrQn where the components Pr, Qr are those received from said phase rotator (ROT), and the components Pn and Qn are those of each of the possible signals of the modulation constellation.

8. Device for phase ambiguity resolution as set forth in claim 4, characterised in that it comprises also a second counter (CNT) which counts for said pre-set number of symbol times (N) after which it supplies a zeroing command to said accumulator means (ACC).

9. Device for phase ambiguity resolution as set forth in claim 8, characterised in that said second counter (CNT) is of the programmable type, and said erroneous phase signal (FE) is used for choosing between two values of symbol times (N) for the two cases of correct and erroneous phase, the one with erroneous phase being the lesser.

FIG. 1

FIG. 2

EP 0 647 046 A1

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | IEEE TRANSACTIONS ON COMMUNICATIONS, vol.38, no.12, December 1990, NEW YORK, US pages 2087 - 2088, XP203338 MENGALI U. ET AL.: 'Phase Ambiguity Resolution in Trellis-Coded Modulations' * the whole document * | 1-9 | H04L27/22 |
| A | WO-A-92 20162 (QUALCOMM) * page 14, line 32 - page 15, line 31 * * figure 3 * | 1-9 | |
| A | MILCOM '92, SAN DIEGO, CALIFORNIA, US, 11-14 OCTOBER 1992, vol.1 pages 405 - 409, XP346762 OSBORNE W. P. ET AL.: 'A Phase Ambiguity Resolution Technique for TCM' * page 406, paragraph II; figure 2 * | 1-9 | |
| A | IEEE GLOBAL TELECOMMUNICATIONS CONFERENCE, SAN DIEGO, CALIFORNIA, US, 2-5 DECEMBER 1990, vol.1 pages 604 - 608, XP218798 MOENECLAEY M. ET AL.: 'Syndrome-Based Viterbi Decoder. Node Synchronization and Out-of-Lock Detection' * page 604, right column, line 6 - line 17 * | 1-9 | TECHNICAL FIELDS SEARCHED (Int.Cl.6) H04L |

The present search report has been drawn up for all claims

| Place of search | Date of completion of the search | Examiner |
|---|---|---|
| THE HAGUE | 24 November 1994 | Ghigliotti, L |

EPO FORM 1503 03.82 (P04C01)